# EUROPEAN PATENT APPLICATION

(11) **EP 4 470 777 A1**
(43) Date of publication of application: **04.12.2024**
(21) Application number: 23746972.1
(22) Date of filing: 25.01.2023
(51) Int. Cl.: B32B 27/32, B65D 65/40, C08L 23/00

(54) **UNSTRETCHED FILM, MULTILAYER BODY AND PACKAGE**

(30) Priority: 26.01.2022 JP 2022010477
(71) Applicant: Mitsui Chemicals, Inc., Tokyo 104-0028 (JP)
(72) Inventor: MIZUMA Takahiro, Ichihara-shi, Chiba 299-0108 (JP); SHIOZAKI Nao, Ichihara-shi, Chiba 299-0108 (JP); KAMIYA Nozomi, Ichihara-shi, Chiba 299-0108 (JP); EGAWA Makoto, Ichihara-shi, Chiba 299-0108 (JP); KAI Yuki, Ichihara-shi, Chiba 299-0108 (JP); HOYA Hiroshi, Ichihara-shi, Chiba 299-0108 (JP)
(74) Representative: Hoffmann Eitle
(86) International application number: PCT/JP2023/002199
(87) International publication number: WO 2023/145761

(57) **Abstract**

The present invention relates to a non-oriented film, a laminated body, and a package; the non-oriented film has a sealant layer composed of a resin composition including 30 to 90 mass% of a propylene-based polymer (A) and 10 to 70 mass% of a 1-butene/α-olefin copolymer (B), and a substrate layer; the propylene-based polymer (A) has a melting point (Tm) measured by differential scanning calorimetry (DSC) of 120°C or higher and 135°C or lower, and contains 50 to 90 mol% of a propylene-derived constitutional unit; the copolymer (B) has a melting point measured by DSC of lower than 120°C or has no melting point observed by DSC, and contains 50 to 99 mol% of a 1-butene-derived constitutional unit and 1 to 50 mol% of an α-olefin-derived constitutional unit (provided that a total of the 1-butene-derived constitutional unit and the α-olefin-derived constitutional unit is 100 mol%), the sealant layer has a thickness of 3 to 30 um, and the substrate layer has a thickness of 10 to 100 um.

## Description

### Technical Field

The present invention relates to a non-oriented film including a sealant film layer and a substrate layer, a laminated body, and a package.

### Background Art

A film for heat seal packaging is composed of a multilayer film. In the field of films for heat seal packaging, there is a tendency that a non-oriented film is employed in a multilayer film in, for example, liquid-oriented or retort packaging-oriented packages requiring a high seal strength.

In addition, polypropylene (PP) films and polyethylene (PE) films are in wide use as films for heat seal packaging; however, among them, mono-material films such as PP mono-material packaging and PE mono-material packaging are valued from the viewpoint of recycling need.

As a sealant film in a packaging material use, films for which a resin composition obtained by blending an ethylene-based copolymer with a propylene-based copolymer or an ethylene-based copolymer alone is used are in wide use. For example, in Patent Literature 1 and 2, laminated bodies including a sealant film containing a polypropylene resin, a propylene/α-olefin copolymer and a 1-butene/α-olefin copolymer and having excellent low-temperature heat sealing properties are described.

### Citation List

### Patent Literature

Patent Literature 1: WO2016/027885
Patent Literature 2: JP2021-070250A

### Summary of Invention

### Technical Problem

Normally, in mono-material packaging using an olefin material (for example, PP), since the heat resistance of a substrate (for example, PP) deteriorates, sealing properties (low-temperature sealing properties) become necessary in a sealant layer of a non-oriented film at a temperature where the substrate does not thermally contract. However, in the case of using the films described in Patent Literature 1 and 2 as non-oriented films, there is a demand for additional improvement from the viewpoint of the balance between the low-temperature heat sealing properties and heat seal strength of a laminated body to be obtained.

The present invention has been made in consideration of what has been described above, and an object of the present invention is to provide a non-oriented film capable of forming a laminated body having excellent low-temperature heat sealing properties and heat seal strength in a well-balanced manner.

### Solution to Problem

The present invention relates to, for example, the following [1] to [8].
[1] A non-oriented film including:
   a sealant layer composed of a resin composition containing
      30 to 90 mass% of a propylene-based polymer (A), and
      10 to 70 mass% of a 1-butene/α-olefin copolymer (B),
   provided that a total of the propylene-based polymer (A) and the copolymer (B) is 100 mass%; and
   a substrate layer,
   wherein the propylene-based polymer (A) has a melting point (Tm) measured by differential scanning calorimetry (DSC) of 120°C or higher and 135°C or lower, and contains 50 to 90 mol% of a propylene-derived constitutional unit, and
   the copolymer (B) has a Tm measured by DSC of lower than 120°C or has no Tm observed by DSC, and contains 50 to 99 mol% of a 1-butene-derived constitutional unit and 1 to 50 mol% of a constitutional unit derived from an α-olefin having 2 or 3 carbon atoms or 5 to 20 carbon atoms, provided that a total of the 1-butene-derived constitutional unit and the α-olefin-derived constitutional unit is 100 mol%.
[2] The non-oriented film according to [1], wherein the sealant layer has a thickness of 3 to 30 um, and the substrate layer has a thickness of 10 to 100 um.
[3] A laminated body including:
   the non-oriented film according to [1] or [2]; and
   an oriented film.
[4] The laminated body according to [3], wherein the oriented film is a film selected from the group consisting of an oriented polyethylene terephthalate film and an oriented polypropylene film.
[5] The laminated body according to [3] or [4], wherein the oriented film has a thickness of 10 to 50 um.
[6] The laminated body according to any one of [3] to [5], wherein
   a maximum value of heat seal strengths in a temperature range of 70°C or higher and 120°C or lower is 8 N/15 mm or higher,
   a maximum value of heat seal strengths in a temperature range of 70°C or higher and 200°C or lower is 15 N/15 mm or higher, and
   in a measurement of the heat seal strength in the temperature range of 70°C or higher and 200°C or lower, a peeling form of a heat-sealed portion when the heat seal strength shows 30 N/15 mm or higher is an edge break.
[7] The laminated body according to any one of [3] to [6], further including at least one functional layer selected from a printing layer, a barrier layer, and an embossing layer,
   wherein the functional layer is adjacent to, or in contact through an adhesive layer, with at least one layer or film selected from the sealant layer, the substrate layer, and the oriented film.
[8] A package formed of the laminated body according to any one of [3] to [7].

### Advantageous Effects of Invention

The non-oriented film of the present invention has the sealant layer and the substrate layer each having a predetermined thickness, and the resin composition containing the specific propylene-based polymer and 1-butene/α-olefin copolymer in predetermined fractions is used for the sealant layer that configures the non-oriented film, whereby the laminated body in which the non-oriented film is used has excellent low-temperature heat sealing properties and heat seal strength in a well-balanced manner. In addition, the laminated body in which the non-oriented film of the present invention is used tends to be excellent in terms of the peeled appearance and also excellent in terms of the blocking resistance.

### Description of Embodiments

### [Non-oriented Film]

A non-oriented film of the present invention has a sealant layer and a substrate layer. That is, the non-oriented film of the present invention has a structure in which a sealant layer and a substrate layer are laminated together. The sealant layer is a layer that imparts thermal adhesiveness to a laminated body having the non-oriented film and an oriented film, and the substrate layer is a layer that holds the sealant layer.

### <<Sealant Layer>>

The sealant layer is composed of a resin composition containing the following (A) and (B) in predetermined fractions.
(A) A propylene-based polymer having a melting point (Tm) measured by differential scanning calorimetry (DSC) of 120°C or higher and 135°C or lower, and containing 50 to 90 mol% of a propylene-derived constitutional unit (hereinafter, also referred to as "copolymer (A)")
(B) A 1-butene/α-olefin copolymer having a melting point measured by DSC of lower than 120°C or having no melting point observed by DSC, and containing 50 to 99 mol% of a 1-butene-derived constitutional unit and 1 to 50 mol% of a constitutional unit derived from an α-olefin having 2 or 3 carbon atoms or 5 to 20 carbon atoms (provided that the total of the 1-butene-derived constitutional unit and the constitutional unit derived from an α-olefin having 2 or 3 carbon atoms or 5 to 20 carbon atoms is 100 mol%) (hereinafter, also referred to as "copolymer (B)")

### <Propylene-Based Polymer (A)>

Examples of the propylene-based polymer (A) include random copolymers of propylene and an α-olefin having 2 carbon atoms or 4 to 20 carbon atoms and block copolymers of propylene and an α-olefin having 2 carbon atoms or 4 to 20 carbon atoms, and random copolymers of propylene and an α-olefin having 2 carbon atoms or 4 to 20 carbon atoms are preferable from the viewpoint of enabling flexibility and transparency to be imparted to the sealant layer. The copolymer (A) may be one kind of copolymer or may be two or more kinds of copolymers.

Examples of the α-olefin having 2 carbon atoms or 4 to 20 carbon atoms that is copolymerized with propylene include ethylene, 1-butene, 1-pentene, 3-methyl-1-butene, 4-methyl-1-pentene, 1-hexene, 1-octene, 1-decene, 1-dodecene, 1-tetradecene, 1-hexadecene, 1-octadecene, and 1-eicosene. These α-olefins may be used singly or two or more thereof may be used.

In the copolymer (A), the content of a propylene-derived constitutional unit is 50 to 90 mol%, preferably 60 to 90 mol%, more preferably 70 to 90 mol%, and still more preferably 70 to 87 mol%, and the content of a structural unit derived from the α-olefin having 2 carbon atoms or 4 to 20 carbon atoms is 10 to 50 mol%, preferably 10 to 40 mol%, more preferably 10 to 30 mol%, and still more preferably 13 to 30 mol% (provided that the total of the propylene-derived constitutional unit and the α-olefin-derived constitutional unit is 100 mol%). When the proportion of the structural unit in the copolymer (A) is within the above-described range, there is a tendency that the low-temperature sealing properties are excellent and the blocking resistance is excellent.

In addition, the melting point (Tm) of the copolymer (A) measured by differential scanning calorimetry (DSC) is 120°C or higher and 135°C or lower and preferably 125°C or higher and 134°C or lower.

When the copolymer (A) having a melting point in the above-described range is used, the formability of the sealant layer improves, and it is possible to impart heat resistance and transparency to the sealant layer.

Furthermore, the heat of fusion (ΔH) that is obtained at the same time as the melting point by DSC is preferably 50 mJ/mg or more.

Regarding the melting point (Tm) of the copolymer (A), the temperature of the peak apex of the crystal melting peak of approximately 5 mg of a specimen that has been heated up to 200°C, held for 10 minutes, then, cooled to 30°C at 10°C/min, held for five minutes, and then heated up to 200°C at 10°C/min in a nitrogen atmosphere (20 mL/min) using a differential scanning calorimeter (for example, DSCPyris1 or DSC7 manufactured by PerkinElmer Inc.) is regarded as the melting point (Tm) of the polymer. In a case where a plurality of peaks is detected, the peak that is detected at the highest temperature is employed.

In addition, the melt flow rate (MFR) of the copolymer (A) is measured according to ASTM D1238 under conditions of 230°C and a load of 2.16 kg and is preferably 0.01 to 40 g/10 min and more preferably 0.1 to 10 g/10 min. When the copolymer (A) having an MFR within the above-described range is used, the fluidity of the resin composition that forms the sealant layer is improved, which makes it easy to form a relatively large sheet.

The copolymer (A) can be produced by polymerizing a monomer by a well-known polymerization method such as a gas phase method, a bulk method, or a slurry method in the presence of a well-known catalyst such as a Ziegler-Natta-based catalyst or a metallocene-based catalyst. One example of a method for making the melting point be 120°C or higher and 135°C or lower is a method in which a polymerization condition such as the amount of the monomer feedbacked is controlled to control the comonomer content rate to be less than 20 mol% in the case of polymerization with a Ziegler-Natta-based catalyst and to control the comonomer content rate to be less than 10 mol% in the case of polymerization with a metallocene-based catalyst, and it is possible to obtain a polymer having an intended melting point by this method.

### <1-Butene/α-Olefin Copolymer (B)>

Examples of the 1-butene/α-olefin copolymer (B) include copolymers of 1-butene and an α-olefin having 2 or 3 carbon atoms or 5 to 20 carbon atoms. The copolymer (B) may be one kind of copolymer or may be two or more kinds of copolymers.

Generally, when the 1-butene/α-olefin copolymer is used, the low-temperature sealing properties and blocking resistance of a laminated body improve. In contrast, when the propylene/α-olefin copolymer is used, the cost is reduced, and the heat seal strength improves, but the low-temperature sealing properties and blocking resistance are not sufficient. Therefore, use in combination with the relatively expensive 1-butene/α-olefin copolymer achieves a laminated body excellent in heat seal strength, low-temperature sealing properties, and blocking resistance, and it becomes easy to satisfy both a variety of physical properties and the reduction of the production cost.

Examples of the α-olefin having 2 or 3 carbon atoms or 5 to 20 carbon atoms that is copolymerized with 1-butene include ethylene, propylene, 1-pentene, 3-methyl-1-butene, 4-methyl-1-pentene, 1-hexene, 1-octene, 1-decene, 1-dodecene, 1-tetradecene, 1-hexadecene, 1-octadecene, and 1-eicosene, and, among these α-olefins, ethylene, propylene, and 1-pentene are preferable, ethylene and propylene are more preferable, and propylene is still more preferable. These α-olefins may be used singly or two or more thereof may be used.

In the copolymer (B), the content of a 1-butene-derived constitutional unit is 50 to 99 mol%, preferably 60 to 97 mol%, and more preferably 70 to 95 mol%, and the content of a constitutional unit derived from the α-olefin having 2 or 3 carbon atoms or 5 to 20 carbon atoms is 1 to 50 mol%, preferably 3 to 40 mol%, and still more preferably 5 to 30 mol% (provided that the total of the 1-butene-derived constitutional unit and the α-olefin-derived constitutional unit is 100 mol%).

Within the above-described ranges, a laminated body becomes excellent in terms of the handleability and is easily heat-sealed even at a relatively low temperature.

In addition, the copolymer (B) has a melting point measured by DSC of lower than 120°C or has no melting point observed by DSC, and has a melting point of preferably 50°C or higher and 115°C or lower, more preferably 60°C or higher and 110°C or lower, and still more preferably 65°C or higher and 110°C or lower. When the copolymer (B) having a melting point in the above-described range is used, a laminated body is easily heat-sealed even at a relatively low temperature and has favorable surface characteristics, and there is a tendency that the blocking resistance is excellent.

Regarding the melting point (Tm) of the copolymer (B), the temperature of the peak apex of the crystal melting peak of approximately 10 mg of a specimen that has been packed into an aluminum pan for measurement, heated up to 200°C at 100°C/min, held for five minutes, then, cooled to -100°C at 10°C/min, and then heated up to 200°C at 10°C/min using a differential scanning calorimeter (for example, DSC manufactured by Seiko Instruments Inc.) is regarded as the melting point (Tm) of the polymer. In a case where a plurality of peaks is detected, the peak that is detected at the highest temperature is employed.

In addition, the melt flow rate (MFR) of the copolymer (B) that is measured according to ASTM D1238 under conditions of 230°C and a load of 2.16 kg is preferably 0.1 to 30 g/10 min, more preferably 0.5 to 20 g/10 min, and still more preferably 1.0 to 10 g/10 min. Furthermore, in the copolymer (B) having an MFR within the above-described range at 230°C, the melt flow rate (MFR) that is measured according to ASTM D1238 under conditions of 190°C and a load of 2.16 kg is preferably 0.1 to 30 g/10 min, more preferably 0.5 to 20 g/10 min, and still more preferably 1.0 to 10 g/10 min. When the copolymer (B) having an MFR within the above-described range is used, the fluidity of the resin composition that forms the sealant layer is improved, which makes it easy to form a relatively large sheet.

The copolymer (B) can be produced by polymerizing a monomer by a well-known polymerization method such as a gas phase method, a bulk method, or a slurry method in the presence of a well-known catalyst such as a Ziegler-Natta-based catalyst or a metallocene-based catalyst. One example of a method for making the melting point be lower than 120°C is a method in which a polymerization condition such as the amount of the monomer feedbacked is controlled to control the comonomer content rate to 20 mol% or more and 50 mol% or less in the case of polymerization with a Ziegler-Natta-based catalyst and to control the comonomer content rate to be 10 mol% or more and 50 mol% or less in the case of polymerization with a metallocene-based catalyst, and it is possible to obtain a copolymer having an intended melting point by this method.

### <Resin Composition That Forms Sealant Layer>

The resin composition that forms the sealant layer in the present invention contains the copolymer (A) and the copolymer (B). Regarding the content of each component, the content of the copolymer (A) is 30 to 90 mass%, preferably 40 to 90 mass%, and more preferably 40 to 80 mass%, and the content of the copolymer (B) is 10 to 70 mass%, preferably 10 to 60 mass%, and more preferably 20 to 60 mass% (provided that the total content of the copolymer (A) and the copolymer (B) is 100 mass%). When the content of each component that is contained in the resin composition is within the above-described range, the low-temperature sealing properties of the laminated body are excellent, and it is possible to produce a non-oriented film having a sufficient heat seal strength.

Here, regarding the contents of the copolymer (A) and the copolymer (B), it is more preferable that the content of the copolymer (A) is equal to or more than the content of the copolymer (B) on top of the fact that both contents satisfy the above-described ranges. When the content of the copolymer (A) is equal to or more than the content of the copolymer (B), there is a tendency that the peeling form of a heat-sealed portion of a laminated body becomes an edge break, which will be described below.

The sealant layer may contain a resin other than the copolymer (A) and the copolymer (B) and an additive such as a tackifier, a weathering stabilizer, a heat stabilizer, an antistatic agent, a slip agent, an anti-blocking agent, a lubricant, a pigment, a dye, a plasticizer, an anti-aging agent, a hydrochloric acid absorber, or an antioxidant as necessary to an extent that the object of the present invention is not impaired.

The sealant layer may be composed of one layer or may be composed of a plurality of layers.

The (co)polymers (A) and (B) that are used in the resin composition that forms the sealant layer and (co)polymers that are used in a resin composition that forms the substrate layer, which will be described below, (hereinafter, also collectively referred to as "(co)polymers that are used in the present invention") each may contain at least one biomass-derived monomer (biomass-derived propylene, biomass-derived ethylene, or a biomass-derived α-olefin having 4 to 20 carbon atoms). Monomers of the same kind that configure the polymer may be biomass-derived monomers alone, may be fossil fuel-derived monomers alone, or may contain both a biomass-derived monomer and a fossil fuel-derived monomer.

### <<Substrate Layer>>

A resin composition that forms the substrate layer is preferably a polypropylene. Examples of the polypropylene include propylene homopolymers and copolymers containing propylene as a main monomer. In the case of the copolymer, the copolymer may be a random copolymer or may be a block copolymer. Examples of a monomer that is copolymerized with propylene include α-olefins having 2 carbon atoms or 4 to 20 carbon atoms and diene compounds. In the polypropylene, the content of a propylene-derived structural unit is preferably 85 to 100 mol% and more preferably 90 to 99.5 mol%, and the content of a structural unit derived from a different monomer is preferably 0 to 15 mol% and more preferably 0.5 to 10 mol% (provided that the total of the propylene-derived constitutional unit and the structural unit derived from a different monomer is 100 mol%).

As the α-olefin having 2 carbon atoms or 4 to 20 carbon atoms that is copolymerized with propylene, ethylene, 1-butene, 1-pentene, 3-methyl-1-butene, 4-methyl-1-pentene, 1-hexene, 1-octene, 1-decene, 1-dodecene, and 1-tetradecene can be exemplified. These α-olefins may be used singly or two or more thereof may be used.

The melt flow rate (MFR) of the polypropylene is measured according to ASTM D1238 under conditions of 230°C and a load of 2.16 kg and is preferably 0.01 to 400 g/10 min and more preferably 0.1 to 100 g/10 min, and the melting point (Tm) is preferably 115°C to 175°C and more preferably 120°C to 170°C.

Specific examples of the polypropylene include propylene homocopolymers, propylene/ethylene random copolymers, propylene/1-butene random copolymers, propylene/1-butene/ethylene random copolymers, propylene/1-hexene random copolymers, propylene/3-methyl-1-butene random copolymersr, and propylene/4-methyl-1-pentene random copolymers. These polypropylenes can be used singly or two or more thereof can also be jointly used.

The polypropylene can be produced by polymerizing a monomer by a well-known polymerization method such as a gas phase method, a bulk method, or a slurry method in the presence of a well-known catalyst such as a Ziegler-Natta-based catalyst or a metallocene-based catalyst.

The polypropylene that is contained in the resin composition that forms the substrate layer is preferably the copolymer (A) contained in the above-described resin composition that forms the sealant layer. In a case where the copolymer (A) is contained in the resin composition that forms the substrate layer, the kind of the copolymer (A) may be the same as or different from that of the copolymer (A) that is used in the resin composition that forms the sealant layer.

The substrate layer may contain a resin other than the polypropylene and an additive such as a tackifier, a weathering stabilizer, a heat stabilizer, an antistatic agent, a slip agent, an anti-blocking agent, a lubricant, a pigment, a dye, a plasticizer, an anti-aging agent, a hydrochloric acid absorber, or an antioxidant to an extent that the object of the present invention is not impaired.

The substrate layer may be composed of one layer or may be composed of a plurality of layers.

### <<Method for Producing Non-oriented Film>>

The non-oriented film of the present invention can be obtained by laminating the sealant layer and the substrate layer. For example, two extruders to which a T die is connected are used, the above-described resin composition that forms the sealant layer and the above-described resin composition that forms the substrate layer are supplied to each of the extruders, and coextrusion forming is performed, whereby the non-oriented film can be produced.

The thickness of the sealant layer is 3 to 30 um and preferably 5 to 25 um. The thickness of the substrate layer is 10 to 100 um and preferably 20 to 75 um. In a case where there are a plurality of the sealant layers and a plurality of the substrate layers, the thickness of each sealant layer is preferably within the above-described range. In addition, the thickness of the entire non-oriented film of the present invention is normally 13 to 130 um and preferably 25 to 100 um.

### <<Laminated Body>>

A laminated body of the present invention has the above-described non-oriented film and an oriented film. Examples of the aspect of the laminated body include structures such as non-oriented film/oriented film and non-oriented film/oriented film/oriented film, but the aspect is not limited thereto. For example, in a case where a plurality of the non-oriented films of the present invention is used, one kind may be used singly or two or more kinds may be used. In addition, it is also possible to arbitrarily provide an adhesive layer between the non-oriented film and the oriented film. In the laminated body of the present invention, it is preferable that the substrate that is included in the non-oriented film is adjacent to or in contact through the adhesive layer with the oriented film.

### <Oriented Film>

As a film that forms the oriented film, a well-known conventional film can be employed depending on the use. Specific examples thereof include films made of a polyester such as polyethylene terephthalate and polyethylene naphthalate, polyethylene carbonate films, polyamide films made of nylon 6 or nylon 66, ethylene/vinyl alcohol copolymer films, polyvinylidene chloride films, and films made of a polyolefin such as polypropylenes.

One oriented film composed of the above-described film may be used singly or two or more oriented films may be used. In addition, the film may be a film on which an inorganic substance such as aluminum, zinc, or silica or an oxide thereof is deposited.

Among these, preferable is at least one selected from the group consisting of an oriented PET film that is obtained by performing a stretching treatment on a film formed of polyethylene terephthalate (PET) and an oriented PP film that is obtained by performing a stretching treatment on a film formed of polypropylene (PP). As a stretching method, a well-known method for producing an oriented film can be used. Specific examples thereof include roll stretching, tenter stretching, and tubular stretching. The stretching ratio is normally 1.5 to 20 times and preferably 2 to 15 times.

The thickness of the oriented film is normally 10 to 50 um and preferably 15 to 45 um, and, in a case where there is a plurality of oriented films, the thickness of each oriented film is preferably within the above-described range. In addition, the thickness of the entire laminated body of the present invention is normally 30 to 150 um and preferably 40 to 115 um.

The laminated body of the present invention has excellent low-temperature sealing properties and a sufficient heat seal strength. This heat seal strength refers to a peel strength (N/mm) when the surfaces of the sealant layers of two same laminated bodies are overlapped together, heated with a lower seal bar set to a temperature of 70°C and an upper seal bar set to a temperature of 70, 80°C, 90°C, 100°C, 110°C, 120°C, 130°C, 140°C, 150°C, 160°C, 170°C, 180°C, 190°C, or 200°C for one seconds across the widths of the seal bars of 5 mm at a pressure of 0.2 MPa and then naturally cooled, 15 mm-wide test specimens are cut out from the heat-sealed test specimens, respectively, and in each test specimen, a heat-sealed portion is peeled off from the surface of the laminated body in a 180° direction at a crosshead speed of 300 mm/min.

The excellent low-temperature sealing properties mean that the maximum value of the heat seal strengths of the laminated body in a temperature range of 70°C or higher and 120°C or lower, that is, the maximum value of the peel strength of each test specimen produced by changing the temperature of the upper seal bar within a range of 70°C to 120°C in the above-described measurement of the heat seal strength is 8 N/15 mm or higher, preferably 9 N/15 mm or higher, and more preferably 10 N/ 15 mm or higher. The upper limit of the maximum value of the heat seal strengths in the temperature range of 70°C or higher and 120°C or lower is normally 50 N/15 mm. When the maximum value of the heat seal strengths of the laminated body in the temperature range of 70°C or higher and 120°C or lower is 8 N/15 mm or higher, heat sealing at a low temperature is possible, and it is also possible to deal with fast loading.

The sufficient heat seal strength means that the maximum value of the heat seal strengths of the laminated body in a temperature range of 70°C or higher and 200°C or lower, that is, the maximum value of the heat seal strength of each test specimen produced by changing the temperature of the upper seal bar within a range of 70°C to 200°C in the above-described measurement of the heat seal strength is preferably 15 N/15 mm or higher, more preferably 20 N/15 mm or higher, still more preferably 25 N/15 mm or higher, and particularly preferably 30 N/ 15 mm or higher. The upper limit of the maximum value of the heat seal strengths in the temperature range of 70°C or higher and 200°C or lower is normally 100 N/15 mm. When the maximum value of the heat seal strengths of the laminated body in the temperature range of 70°C or higher and 200°C or lower is 15 N/15 mm or higher, the adhesion of the sealed portion is excellent, and the loading of heavy goods also becomes possible.

Here, in the above-described measurement of the heat seal strength, the two heat-sealed laminated bodies peel off from each other in a form of cohesive peeling due to the edge break of the heat-sealed portion or the occurrence of a film break or tearing of a film. In the present invention, it is preferable that the heat-sealed portion of the laminated body peels off when the heat seal strength first shows a value of 30 N/15 mm or higher in the measurement of the heat seal strength in the temperature range of 70°C or higher and 200°C or lower, that is, in a test piece for which the temperature of the upper seal bar was lowest during the production of the test pieces among the test pieces in which the heat seal strength has reached 30 N/15 nm or higher in the above-described measurement of the heat seal strength and the peeling form is an edge break.

In addition, the laminated body of the present invention is also excellent in terms of blocking resistance in some cases. A smaller value of the blocking force means superior anti-blocking characteristics, and the value is normally 15 N/m or lower, preferably 10 N/m or lower, and more preferably 7 N/m or lower. When the blocking force is within the above-described range, it is possible to effectively prevent blocking during preservation. A method for measuring the blocking force will be described below in detail in examples.

The laminated body of the present invention may be produced by laminating the non-oriented film and the oriented film by dry lamination, non-solvent lamination, or sand lamination or may be produced by laminating the non-oriented film and the oriented film by melt extrusion lamination. Among them, a method in which the films are laminated by dry lamination or melt extrusion lamination is preferable.

In addition, the laminated body of the present invention may further have at least one functional layer selected from a printing layer, a barrier layer, and an embossing layer to impart a specific function to the sealant layer, the substrate layer, and the oriented film. From the viewpoint of imparting a function to the sealant layer, the substrate layer, and the oriented film, the functional layer is preferably adjacent to, or in contact with through an adhesive layer, with at least one layer or film selected from the sealant layer, the substrate layer, and the oriented film.

As the functional layer, it is possible to use a resin film on which an inorganic compound or an inorganic oxide is deposited, a metal foil, a coated film of a resin having a special function, or a resin film on which a pattern is printed.

Here, as the resin film that is used, the same resin film as a resin film used as a substrate film can be used, and furthermore, and the same plastic compounding agent or additive can also be added in an arbitrary amount depending on the purpose to an extent that other performances are not adversely affected.

The resin film can be produced by, for example, a film formation method that has been conventionally used such as an extrusion method, a casting method, a T die method, a cutting method, an inflation method using one or more resins selected from the group of the same resins as the resins for the substrate film or by a multilayer coextrusion film formation method using two or more resins. Furthermore, the resin film can be stretched in one axial direction or two axial directions using, for example, a tenter method or a tubular method from the viewpoint of the strength, dimensional stability and heat resistance of the film.

For example, the laminated body further including a barrier layer can be produced by the same method as a method for producing a laminated body including a step of forming the barrier layer by metal vapor deposition, a coating method or a coextrusion method as the sealant layer, the substrate layer, or one layer in the oriented film and a step of laminating the above-described non-oriented film and oriented film.

The laminated body of the present invention has excellent low-temperature sealing properties and a high heat seal strength as described above. Furthermore, there is a tendency that the blocking resistance and the peeled appearance of the heat-sealed portion are excellent.

### <Package>

It is possible to obtain a package from the laminated body of the present invention. The package formed of the laminated body of the present invention is excellent in terms of the low-temperature sealing properties. In addition, for the package formed of the laminated body of the present invention obtained as described above, it is possible to maintain the heat seal strength on the same level as or a higher level than those of conventional products even in a case where the package has been formed at a conventional heat sealing temperature (for example, approximately higher than 100°C to 160°C).

For example, the package can be produced by making the sealant layers of the laminated bodies face each other or making the sealant layer of the laminated body and a different film face each other and then heat-sealing at least a part of the circumference from the outer surface side so as to form a desired container shape. In addition, a sealed package can be produced by heat-sealing the entire circumference. When this forming step of the package is combined with a loading step of a content, that is, the bottom part and side parts of the package are heat-sealed, a content is loaded, and the upper part is then heat-sealed, a package containing the content can be produced. This package can be used in an automatic packaging device of a solid matter such as snacks or bread, a powder or a liquid material.

In addition, a content is loaded into a container obtained by forming the laminated body or a sheet made of the laminated body into a cup shape by vacuum forming or air pressure forming in advance, a container obtained by injection or a container formed of a paper substrate, then, the container is coated with the laminated body of the present invention as a lid, and the upper part or side parts of the container are heat-sealed, whereby a container packaging the content can be obtained. This container is suitably used for the packaging of instant noodles, miso, jelly, pudding, and snacks.

In the case of being composed of a mono-material, the laminated body or package can be effectively used even as a recycled product. A formed article that is a recycled product of the laminated body or package makes it possible to reduce the amount of newly-polymerized plastic used and becomes an article capable of contributing to the reduction of the environmental load.

### Examples

Next, a laminated body of the present invention will be described in more detail by showing examples, but the present invention is not limited thereto.

Materials used in the examples and comparative examples will be shown below.

### (A) Propylene-Based Polymer

rPP (a-1): Random polypropylene (MFR (230°C, 2.16 kg load, according to ASTM D1238): 5 g/10 min, melting point: 133°C, propylene content: 85 mol%, 1-butene content: 15 mol%)
rPP (a-2): Random polypropylene (MFR (230°C, 2.16 kg load, according to ASTM D1238): 5 g/10 min, melting point: 131°C, propylene content: 79 mol%, 1-butene content: 21 mol%)
rPP (a'-1): Random polypropylene (MFR (230°C, 2.16 kg load, according to ASTM D1238): 7 g/10 min, melting point: 138°C, propylene content: 95 mol%, ethylene content: 2 mol%, 1-butene content: 3 mol%)

### (B) 1-Butene/α-Olefin Copolymer

BPR (B-1): 1-Butene/propylene copolymer (MFR (230°C, 2.16 kg load, according to ASTM D1238): 9 g/10 min, MFR (190°C, 2.16 kg load, according to ASTM D1238): 4 g/10 min, melting point: 100°C, 1-butene content: 87 mol%, propylene content: 13 mol%)

The melting point, heat seal strength and blocking force of each copolymer were measured by the following measuring methods.

### [Method for Measuring Melting Point]

### (Propylene-Based Polymer)

The temperature of the peak apex of the crystal melting peak of approximately 5 mg of a specimen that had been heated up to 200°C, held for 10 minutes, then, cooled to 30°C at 10°C/min, held for five minutes, and then heated up to 200°C at 10°C/min in a nitrogen atmosphere (20 mL/min) using a differential scanning calorimeter (DSCPyris1 manufactured by PerkinElmer Inc.) was regarded as the melting point (Tm) of the propylene-based polymer.

### (1-Butene/α-Olefin Copolymer)

The temperature of the peak apex of the crystal melting peak of approximately 10 mg of a specimen that had been packed into an aluminum pan for measurement, heated up to 200°C at 100°C/min, held for five minutes, then, cooled to - 100°C at 10°C/min, and then heated up to 200°C at 10°C/min in a nitrogen atmosphere (20 mL/min) using a differential scanning calorimeter (DSC manufactured by Seiko Instruments Inc.) was regarded as the melting point (Tm) of the 1-butene/α-olefin copolymer.

### [Method for Measuring Heat Seal Strength]

The surfaces of sealant layers of two laminated bodies were overlapped together, heated with a lower seal bar set to 70°C and an upper seal bar set to 70°C, 80°C, 90°C, 100°C, 110°C, 120°C, 130°C, 140°C, 150°C, 160°C, 170°C, or 180°C for one seconds across the widths of the seal bars of 5 mm at a pressure of 0.2 MPa and then naturally cooled. Next, 15 mm-wide test specimens were cut out from the heat-sealed test specimens, respectively, and in each test specimen, a heat-sealed portion was peeled off from the surface of the laminated body in a 180° direction at a crosshead speed of 300 mm/min, the peel strength was measured, and a numerical value thereof was regarded as the heat seal strength.

For test specimens for which the temperature of the upper seal bar at the time of producing the test specimen when the heat seal strength first showed 30 N/15 mm or higher was higher than the temperature of the upper seal bar at the time of producing the test specimen in which an edge break or cohesive peeling occurred in the evaluation of the peeled appearance, which will be described below, the heat seal strengths were not measured. In addition, the upper limit of the temperature of the upper seal bar in the present test was set to 180°C, and for test specimens for which the heat seal strength did not exceed 30 N/15 mm until the temperature of the upper seal bar reached 180°C as well, the heat seal strengths were not measured at subsequent temperatures.

### (Low-Temperature Sealing Properties)

The low-temperature sealing properties of the laminated body were evaluated according to the following standards.
O: The maximum value of the heat seal strengths in a temperature range of 70°C or higher and 120°C or lower is 8 N/15 mm or higher
X: The maximum value of the heat seal strengths in the temperature range of 70°C or higher and 120°C or lower is lower than 8 N/15 mm

### (Maximum Heat Seal Strength)

The maximum value of the heat seal strengths of the laminated body was evaluated according to the following standards.
O: The maximum value of the heat seal strengths in a temperature range of 70°C or higher and 200°C or lower is 30 N/15 mm or higher
X: The maximum value of the heat seal strengths in the temperature range of 70°C or higher and 200°C or lower is lower than 30 N/15 mm

### (Peeled Appearance (Peeling Form))

In the measurement of the heat seal strength, the peeling form of the heat-sealed portion of a sample in which the heat-sealed portion was peeled off when the heat seal strength showed 30 N/15 mm or higher was confirmed, and the occurrence of an edge break, cohesive peeling, a film break, or tearing of a film was evaluated according to the following standards. In the measurement of the heat seal strength, in a case where the heat seal strength did not exceed 30 N/15 mm until the temperature of the seal bar reached 180°C, the peeled appearance when the maximum value was shown was evaluated.
O: An edge of a welded surface broke (edge break)
Δ: Cohesive peeling occurred
X: A film break and tearing of a film occurred

### [Method for Measuring Blocking Force]

The laminated bodies were made into a 200 mm-wide strip shape, the sealant surfaces of two strip-shaped laminated bodies were made to face each other and put into an air oven (50°C), a load of 20 kg was applied from above the overlapped laminated bodies, and the laminated bodies were cured for three days. After that, the laminated bodies were removed from the air oven, the strength was measured when the two strip-shaped laminated bodies were peeled off from each other in a 180° direction with respect to the surfaces of the laminated bodies at a rate of 200 mm/min, and a numerical value thereof was regarded as the blocking force.

### (Blocking Force)

The blocking force of the laminated body was evaluated according to the following standards.
O: The blocking force is less than 10 N/m
Δ: The blocking force is 10 N/m or more

### [Example 1]

70 Parts by mass of rPP (a-1) and 30 parts by mass of BPR (B-1) were blended together, and a resin composition for producing a sealant layer was prepared. Furthermore, 1000 ppm of erucamide was added to the resin composition as a slip agent, 1200 ppm of silica (particle diameter: 3 um) was added to the resin composition as an anti-blocking agent, and the components were blended.

The resin composition for producing a sealant layer to which the additives had been added and rPP (a'-1) for producing a substrate layer were supplied to each of two extruders to which a T die was connected, the temperatures of the die and the resin were set to 230°C, and a non-oriented film in which a 50 um-thick non-stretched substrate layer and a 20 um-thick non-stretched sealant layer were laminated together was produced by coextrusion forming by adjusting the extrusion amount of each extruder. Next, a 25 um-thick oriented PET film (manufactured by Toray Industries, Inc.) was laminated on the surface of the substrate layer of the obtained non-oriented film by a dry lamination method through an adhesive layer, thereby producing a laminated body. The low-temperature sealing properties, the maximum heat seal strength, the peeled appearance, and the blocking force were obtained by the above-described measuring methods using this laminated body. The results are shown in Table 1.

### [Examples 2 to 6 and Comparative Examples 1 to 4]

Laminated bodies were produced in the same manner as in Example 1 except that the composition of the resin composition for producing a sealant layer was changed to a composition shown in Table 1 or an oriented PP film (manufactured by Mitsui Chemicals Tohcello, Inc.) was used as the oriented film. The low-temperature sealing properties, the maximum heat seal strength, the peeled appearance, and the blocking force were obtained by the above-described measuring methods using each of these laminated bodies. The results are shown in Table 1.

**[Table 1]**

| Layer constitution | Layer constituting material | Unit | Example 1 | Example 2 | Example 3 | Example 4 | Example 5 |
|---|---|---|---|---|---|---|---|
| Sealant layer (thickness 20µm) | rPP(a-1) | Mass% | 70 | 40 | 0 | 70 | 40 |
| | rPP(a-2) | Mass% | 0 | 0 | 70 | 0 | 0 |
| | rPP(a'-1) | Mass% | 0 | 0 | 0 | 0 | 0 |
| | BPR(B-1) | Mass% | 30 | 60 | 30 | 30 | 60 |
| | Slip agent | ppm | 1000 | 1000 | 1000 | 1000 | 1000 |
| | Anti-blocking agent | ppm | 1200 | 1200 | 1200 | 1200 | 1200 |
| Substrate layer (thickness 50µm) | rPP(a'-1) | Mass% | 100 | 100 | 100 | 100 | 100 |
| Oriented film (thickness 25µm) | | - | Oriented PET | Oriented PET | Oriented PET | Oriented PP | Oriented PP |
| | | Temperature | | | | | |
| | | 70°C | | | | | |
| | | 80°C | | 28.9 | 6.4 | | 24.5 |
| | | 90°C | 12.1 | 32.8 | 22.8 | 13.5 | 31.3 |
| | | 100°C | 21.9 | | 27.7 | 20.5 | |
| | | 110°C | 26.0 | | 30.7 | 25.9 | |
| | | 120°C | 30.9 | | | 31.3 | |
| Heat seal strength (N/15mm) | | 130°C | | | | | |
| | | 140°C | | | | | |
| | | 150°C | | | | | |
| | | 160°C | | | | | |
| | | 170°C | | | | | |
| | | 180°C | | | | | |
| | | 190°C | | | | | |
| | | 200°C | | | | | |
| Low-temperature sealing properties (°C) (≥8N/15 mm) | | ≥70°C, ≤120°C | 90 | 80 | 90 | 90 | 80 |
| Maximum heat seal strength (N/15 mm) | | ≥70°C, ≤200°C | 30.9 | 32.8 | 30.7 | 31.3 | 31.3 |
| Peeled appearance | | - | Edge break | Cohesive peeling | Edge break | Edge break | Cohesive peeling |
| Blocking force (N/m) | | - | 9.9 | 13.2 | 14.8 | 9.9 | 13.2 |
| Evaluation | Low-temperature sealing properties | - | O | O | O | O | O |
| | Maximum heat seal strength | - | O | O | O | O | O |
| | Peeled appearance | - | O | Δ | O | O | Δ |
| | Blocking force | - | O | Δ | Δ | O | Δ |

**Table 1 (continued)**

| Layer constitution | Layer constituting material | Unit | Example 6 | Comparative Example 1 | Comparative Example 2 | Comparative Example 3 | Comparative Example 4 |
|---|---|---|---|---|---|---|---|
| Sealant layer (thickness 20µm) | rPP(a-1) | Mass% | 0 | 100 | 0 | 0 | 0 |
| | rPP(a-2) | Mass% | 70 | 0 | 100 | 0 | 0 |
| | rPP(a'-1) | Mass% | 0 | 0 | 0 | 100 | 70 |
| | BPR(B-1) | Mass% | 30 | 0 | 0 | 0 | 30 |
| | Slip agent | ppm | 1000 | 1000 | 1000 | 1000 | 1000 |
| | Anti-blocking agent | ppm | 1200 | 1200 | 1200 | 1200 | 1200 |
| Substrate layer (thickness 50µm) | rPP(a'-1) | Mass% | 100 | 100 | 100 | 100 | 100 |
| Oriented film (thickness 25µm) | | - | Oriented PP | Oriented PET | Oriented PET | Oriented PET | Oriented PET |
| | | Temperature | | | | | |
| | | 70°C | | | | | |
| | | 80°C | 7.8 | | | | |
| | | 90°C | 24.8 | | | | |
| | | 100°C | 27.5 | 3.4 | | | |
| | | 110°C | 30.1 | 4.3 | 0.8 | | |
| | | 120°C | | 5.2 | 2.6 | | 3.5 |
| | | 130°C | | 7.9 | 10.6 | | 7.6 |
| Heat seal strength (N/15mm) | | 140°C | | 16.5 | 28.3 | 1.0 | 23.8 |
| | | 150°C | | 24.9 | 31.6 | 9.0 | 29.3 |
| | | 160°C | | 30.9 | | 27.8 | 32.2 |
| | | 170°C | | | | 29.2 | |
| | | 180°C | | | | 26.6 | |
| | | 190°C | | | | | |
| | | 200°C | | | | | |
| Low-temperature sealing properties (°C) (≥8N/15 mm) | | ≥70°C, ≤120°C | 90 | 140 | 130 | 150 | 140 |
| Maximum heat seal strength (N/15 mm) | | ≥70°C, ≤200°C | 30.1 | 30.9 | 31.6 | 29.2 | 32.2 |
| Peeled appearance | | - | Edge break | Edge break | Edge break | Edge break | Edge break |
| Blocking force (N/m) | | - | 14.8 | 0.5 | 1.2 | - | 1.0 |
| Evaluation | Low-temperature sealing properties | - | O | X | X | X | X |
| | Maximum heat seal strength | - | O | O | O | X | O |
| | Peeled appearance | - | O | O | O | O | O |
| | Blocking force | - | Δ | O | O | - | O |

## Claims

1. A non-oriented film comprising:
a sealant layer composed of a resin composition comprising
30 to 90 mass% of a propylene-based polymer (A), and
10 to 70 mass% of a 1-butene/α-olefin copolymer (B),
provided that a total of the propylene-based polymer (A) and the copolymer (B) is 100 mass%; and
a substrate layer,
wherein the propylene-based polymer (A) has a melting point measured by differential scanning calorimetry of 120°C or higher and 135°C or lower, and contains 50 to 90 mol% of a propylene-derived constitutional unit, and
the copolymer (B) has a melting point measured by differential scanning calorimetry of lower than 120°C or has no melting point observed by differential scanning calorimetry, and contains 50 to 99 mol% of a 1-butene-derived constitutional unit and 1 to 50 mol% of a constitutional unit derived from an α-olefin having 2 or 3 carbon atoms or 5 to 20 carbon atoms, provided that a total of the 1-butene-derived constitutional unit and the α-olefin-derived constitutional unit is 100 mol%,
the sealant layer has a thickness of 3 to 30 um, and the substrate layer has a thickness of 10 to 100 um.

2. A laminated body comprising:
the non-oriented film according to claim 1; and
an oriented film.

3. The laminated body according to claim 2, wherein the oriented film is a film selected from the group consisting of an oriented polyethylene terephthalate film and an oriented polypropylene film.

4. The laminated body according to claim 2, wherein the oriented film has a thickness of 10 to 50 um.

5. The laminated body according to claim 2, wherein
a maximum value of heat seal strengths in a temperature range of 70°C or higher and lower than 120°C is 8 N/15 mm or higher,
a maximum value of heat seal strengths in a temperature range of 70°C or higher and 200°C or lower is 15 N/15 mm or higher, and
in a measurement of the heat seal strength in the temperature range of 70°C or higher and 200°C or lower, a peeling form of a heat-sealed portion when the heat seal strength shows 30 N/15 mm or higher is an edge break.

6. The laminated body according to claim 2, further comprising at least one functional layer selected from a printing layer, a barrier layer, and an embossing layer,
wherein the functional layer is adjacent to, or in contact through an adhesive layer, with at least one layer or film selected from the sealant layer, the substrate layer, and the oriented film.

7. A package formed of the laminated body according to any one of claims 2 to 6.
